# EUROPÄISCHE PATENTSCHRIFT

(11) **EP 1 608 033 B1**
(45) Veröffentlichungstag und Bekanntmachung des Hinweises auf die Patenterteilung: **23.06.2010**
(21) Anmeldenummer: 05004626.7
(22) Anmeldetag: 03.03.2005
(51) Int. Cl.: H01M 8/02, H01M 8/10, H01M 8/24

(54) **Substrat mit integrierter Dichtung**
Substrate with integrated seal
Substrat avec joint intégré

(30) Priorität: 15.06.2004 DE 102004028857
(43) Veröffentlichungstag der Anmeldung: 21.12.2005
(73) Patentinhaber: Carl Freudenberg KG, 69469 Weinheim (DE)
(72) Erfinder: Gerding, Lars, 69469 Weinheim (DE); Wolf, Joachim, 69469 Weinheim (DE)

(56) Entgegenhaltungen:
- US-A- 6 057 054
- US-A1- 2003 211 378

## Beschreibung

### Technisches Gebiet

### Stand der Technik

Die Erfindung betrifft ein Substrat mit einer integrierten elastischen Dichtung, die im Randbereich des Substrats angeordnet ist und mindestens drei im wesentlichen parallel zum Substratrand verlaufende Längsrippen umfasst, zwischen denen durch Querrippen voneinander getrennte Kammern ausgebildet sind, wobei die Längsrippen und die Querrippen im wesentlichen senkrecht zur Substratebene orientiert sind.

Als Substrate im Sinne der Erfindung kommen sogenannte "soft goods" in Frage, wie beispielsweise die einzelnen Lagen einer Membran-Elektroden-Anordnung (MEA) und auch die gesamte MEA einer Brennstoffzelle häufig bezeichnet werden, oder auch Substrate aus einem porösen Material, wie beispielsweise Papier. Typischerweise umfasst eine MEA eine Polymerelektrolytmembran (PEM) und zwei Gasdiffusionslagen (GDL), zwischen denen die PEM sandwichartig angeordnet ist. Eine Hauptoberfläche der PEM ist mit einer Anodenkatalysatorschicht versehen, während auf der anderen Hauptoberfläche eine Kathodenkatalysatorschicht aufgebracht ist. Die GDLs werden in der Regel in Form eines Vliesstoffs oder als Papierlage realisiert. Üblicherweise umfasst eine Brennstoffzelle eine MEA, die zwischen zwei Bipolarplatten (BPP) angeordnet ist. Über die BPPs werden der MEA bzw. der Anodenseite und der Kathodenseite der PEM die entsprechenden Reaktionsgase zugeführt.

Eine integrierte Dichtung, die im Randbereich einer MEA angeordnet ist, soll zum einen verhindern, dass sich die anodenseitigen Reaktionsgase mit den kathodenseitigen Reaktionsgasen vermischen und dann unkontrolliert miteinander reagieren. Zum anderen soll mit Hilfe einer derartigen Dichtung ein Brennstoffverlust bedingt durch Gasaustritt aus der Brennstoffzelle verhindert werden.

Im US-Patent 6,057,054 wird eine Membran-Elektroden-Anordnung (MEA) mit einer integrierten Dichtung beschrieben, die die MEA rahmenartig umgibt. Der Randbereich der MEA ist imprägniert. Diese Imprägnierung erstreckt sich über alle Lagen der MEA und verbindet diese. Auch die Dichtung ist über die Imprägnierung an die MEA angebunden. In der Dichtung sind zwei Rippenstrukturen ausgebildet, die jeweils im wesentlichen senkrecht zur Substratebene orientiert sind, also von der Vorderseite und von der Rückseite der MEA, abragen. Jede der beiden Rippenstrukturen umfasst drei im wesentlichen parallel zum Substratrand verlaufende Längsrippen, zwischen denen einzelne Kammern ausgebildet sind, die durch Querrippen voneinander getrennt sind. Die Querrippen erstrecken sich über alle drei Längsrippen, so dass sie zusammen mit den Längsrippen 4-Wege-Kreuzungen bilden. Dadurch sind die Kammern zwischen der inneren und der mittleren Längsrippe und die Kammern zwischen der mittleren und der äußeren Längsrippe jeweils in einer Reihe hintereinander angeordnet.

Ein Entweichen von Reaktionsgasen kann mit Hilfe dieser bekannten Dichtung sehr wirkungsvoll verhindert werden, da die Längsrippen der Rippenstruktur wie drei hintereinander angeordnete Dichtlippen wirken. Deren dreifache Dichtwirkung wird durch die Querrippen zusätzlich erhöht, da hier nur dann Gas austreten kann, wenn alle drei Längsrippen eine undichte Stelle im Bereich einer Kammerreihe aufweisen.

Die bekannte Dichtung bzw. MEAs die mit der bekannten Dichtung ausgestattet sind, erweisen sich in der Praxis jedoch als problematisch. Bedingt durch die 4-Wege-Kreuzungen zwischen den Längsrippen und den Querrippen der Rippenstruktur treten große Steifigkeitsunterschiede in der Dichtungsstruktur auf. Aufgrund dieser Steifigkeitsunterschiede wird die Dichtungsstruktur in der Regel ungleichmäßig mit Druck beaufschlagt, d.h. beansprucht, was deren Funktion beeinträchtigt. Außerdem summieren sich die Steifigkeitsunterschiede beim Aufbau eines Brennstoffzellenstacks lokal auf und führen zu einer ungleichmäßigen Druckbelastung der einzelnen Komponenten des Stacks, was bei einer ungünstigen Kombination der Toleranzen der Zell-Komponenten zur Undichtigkeit führen kann.

Aus der US 200310211378 A1 ist eine Membran-Elektroden-Anordnung bekannt bei der die Gasdiffusionslagen an ihren Randbereichen mit dem Dichtungsmaterial imprägniert sind. An diesen imprägnierten Randbereich schließt sich außenumfangsseitig die Dichtung an.

### Darstellung der Erfindung

Ausgehend vom Stand der Technik, der sich aus dem US-Patent 6,057,054 ergibt, wird mit der vorliegenden Erfindung ein Substrat mit einer integrierten elastischen Dichtung vorgeschlagen, die zuverlässig an dem Randbereich einer Membran-Elektroden-Anordnung angebunden ist.

Dies wird erfindungsgemäß dadurch erreicht, dass die Dichtung mit der Rippenstruktur den mit einer Imprägnierung versehenen Randbereich der Membran-Elektroden-Anordnung umgreift.

Einerseits ist erkannt worden, dass sich mit Hilfe der bekannten Rippenstruktur eine sehr gute Dichtwirkung erzielen lässt, die insbesondere auf die zwischen den Längsrippen und Querrippen der Rippenstruktur ausgebildeten Kammern zurückzuführen ist. Andererseits ist aber auch erkannt worden, dass diese gitterartige Rippenstruktur große Unterschiede in der lokalen Steifigkeit der Dichtung bedingt, die die Funktion der Dichtung beeinträchtigen. Deshalb wird erfindungsgemäß vorgeschlagen, die Querrippen der Rippenstruktur so zu dimensionieren und anzuordnen, dass die Kammern zwischen der inneren und der mittleren Längsrippe und die Kammern zwischen der mittleren und der äußeren Längsrippe versetzt zueinander angeordnet sind. Erfindungsgemäß ist nämlich erkannt worden, dass die Rippenstruktur dann im wesentlichen nur 3-Wege-Kreuzungen umfasst, die eine deutlich geringere Steifigkeit aufweisen als die 4-Wege-Kreuzungen der bekannten Dichtung. Außerdem sind die 3-Wege-Kreuzungen der erfindungsgemäßen Dichtung bei gleicher Anzahl von Kammern gleichmäßiger über die Dichtungsstruktur verteilt als die 4-Wegekreuzungen der bekannten Dichtung. Erfindungsgemäß lässt sich demnach eine Dichtung mit sehr guter Dichtwirkung und relativ homogener Steifigkeit realisieren. Wie bereits erwähnt, handelt es sich bei der Dichtung des erfindungsgemäßen Substrats um eine integrierte Dichtung, also eine Dichtung, die direkt an das Substrat angeformt wird. Im Hinblick auf eine zuverlässige Anbindung und damit auch eine gute Dichtwirkung ist es von Vorteil, wenn der Randbereich des Substrats imprägniert ist und die Dichtung über diese Imprägnierung an das Substrat angebunden ist. Die Rippenstruktur kann dann nicht nur am Dichtungsrahmen, also außerhalb des Substrats, ausgebildet sein, sondern auch über dem Substrat im Bereich der Imprägnierung.

Grundsätzlich lässt sich die Erfindung in Verbindung mit unterschiedlichsten Substraten realisieren und ist insbesondere nicht beschränkt auf MEAs und deren Schichtkomponenten. Im Rahmen der Erfindung liegen zudem verschiedene Möglichkeiten für die Realisierung der integrierten Dichtung.

So kann es bei einigen Substraten und für bestimmte Verwendungszwecke vorteilhaft sein, nur eine Rippenstruktur an der Dichtung vorzusehen, die dann einseitig von der Substratebene abragt. Erfindungsgemäß kann ein Substrat aber auch mit einer Dichtung ausgestattet werden, an der sowohl auf der Vorderseite als auch auf der Rückseite eine Rippenstruktur ausgebildet ist. Die Lage des Substrats bezüglich einer solchen zweiseitig strukturierten Dichtung muss nicht immer mittig sein, sondern kann über die jeweilige Höhe der beiden Rippenstrukturen eingestellt werden. Beidseitig strukturierte Dichtungen eignen sich beispielsweise für MEAs, die sandwichartig zwischen zwei BPPs angeordnet werden. In diesem Fall erweist es sich sowohl im Hinblick auf die Assemblierung der Brennstoffzelle als auch im Hinblick auf die Herstellung der integrierten Dichtung in einem urformenden Verfahren als vorteilhaft, wenn die auf der Vorderseite der Dichtung ausgebildete Rippenstruktur spiegelsymmetrisch zu der auf der Rückseite der Dichtung ausgebildeten Rippenstruktur ist.

Die Dichtung des erfindungsgemäßen Substrats kann zusätzlich zu der voranstehend beschriebenen Rippenstruktur mit den versetzt zueinander angeordneten Kammern auch noch weitere Dichtstrukturen umfassen. In einer besonders vorteilhaften Variante ist mindestens eine zusätzliche, im wesentlichen parallel zum Substratrand verlaufende Dichtlippe vorgesehen, die genauso wie die Rippenstruktur im wesentlichen senkrecht zur Substratebene orientiert ist. Eine solche Dichtlippe kann beispielsweise im Randbereich der elastischen Dichtung angeordnet sein, während die Rippenstruktur im Bereich der Imprägnierung angeordnet ist. Ragt die Dichtlippe weiter von der Substratebene ab als die Rippenstruktur, so kann die Rippenstruktur in vorteilhafter Weise als Stopper beim Verpressen der Dichtlippe genutzt werden, um ein übermäßiges Verpressen zu verhindern.

### Kurzbeschreibung der Zeichnungen

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung zweier Ausführungsbeispiele der Erfindung anhand der Zeichnungen verwiesen.
- Fig. 2a: zeigt eine Draufsicht auf ein Substrat mit einer integrierten Dichtung gemäß einer zweiten Ausführungsform der Erfindung,
- Fig. 2b: zeigt einen Schnitt entlang der Linie A-A in Fig. 2a,
- Fig. 2c: zeigt einen Schnitt entlang der Linie B-B in Fig. 2a.
- Fig. 3a: zeigt eine Draufsicht auf ein Substrat mit einer integrierten Dichtung gemäß einer dritten Ausführungsform der Erfindung,
- Fig. 3b: zeigt einen Schnitt entlang der Linie A-A in Fig. 3a,
- Fig. 3c: zeigt einen Schnitt entlang der Linie B-B in Fig. 3a.
- Fig. 4a: zeigt eine Draufsicht auf ein Substrat mit einer integrierten Dichtung gemäß einer vierten Ausführungsform der Erfindung,
- Fig. 4b: zeigt einen Schnitt entlang der Linie A-A in Fig. 4a,
- Fig. 4c: zeigt einen Schnitt entlang der Linie B-B in Fig. 4a.

### Ausführung der Erfindung

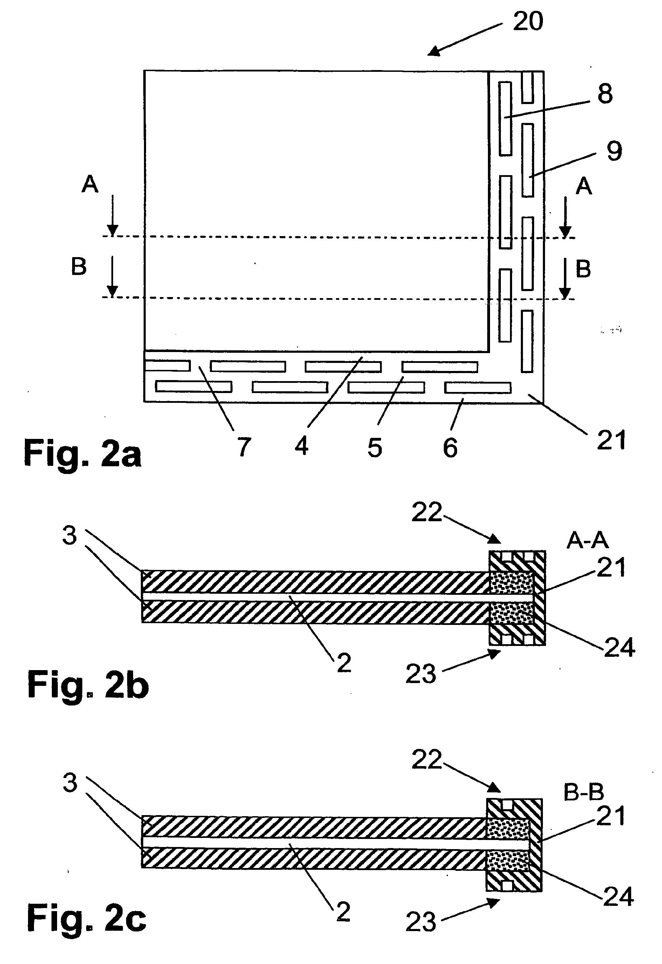

Alle Figuren 2 bis 4 zeigen jeweils einen Abschnitt einer Membran-ElektrodenAnordnungen (MEA) 20, 30 und 40 mit einer Membran 2, die zwischen zwei Gasdiffusionslagen (GDL) 3 angeordnet ist, wobei die MEAs 1 als Beispiel für ein Substrat im Sinne der Erfindung fungieren. Alle dargestellten MEAs 20, 30 und 40 sind mit einer integrierten elastischen Dichtung 21, 31 bzw. 41 ausgestattet, die sich an den Randbereich anschließt.

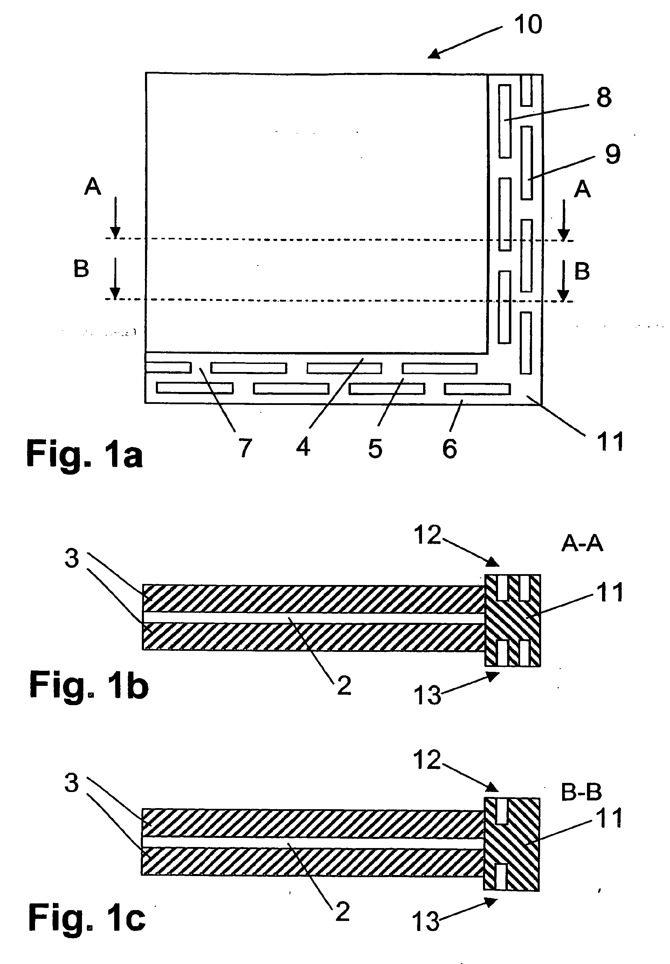

Im Fall des in den Figuren 2a bis 2c dargestellten Ausführungsbeispiels sind die Membran 2 und die GDLs 3 coextensiv. Jedoch ist die Dichtung 21 hier über eine Imprägnierung 24 des Randbereichs an die MEA 20 angebunden. Dies ist in den Figuren 2b und 2c dargestellt. Diese Figuren verdeutlichen, dass die Dichtung 21 den Randbereich der MEA 20 umgreift und das Dichtungsmaterial zumindest in die beiden GDLs 3 im Randbereich der MEA 20 eingedrungen ist. Auch die Dichtung 21 weist eine erste Rippenstruktur 22 auf der Vorderseite und eine spiegelsymmetrische zweite Rippenstruktur 23 auf der Rückseite auf, wie sie in Verbindung mit den Figuren 1a bis 1c voranstehend erläutert worden sind. Allerdings sind die Rippenstrukturen 22 und 23 hier im Bereich der Imprägnierung 24 also über dem Randbereich der MEA 20 angeordnet.

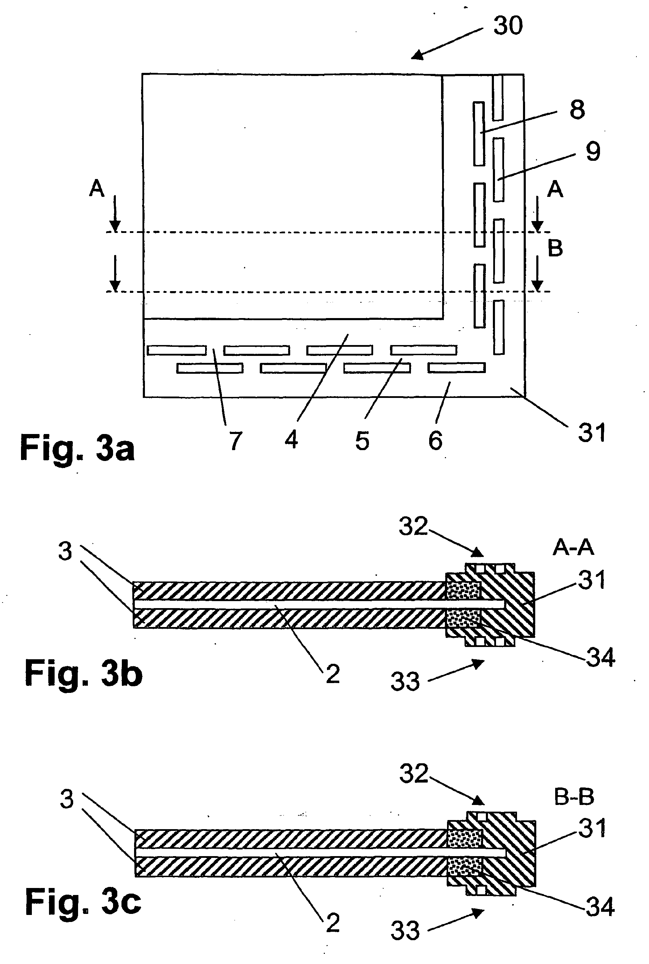

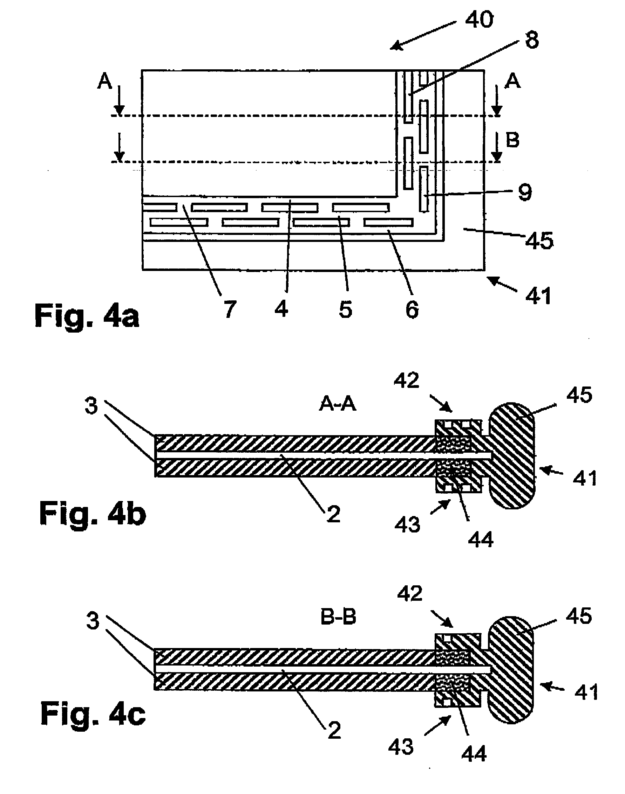

Die einzelnen Lagen der in den Figuren 3 und 4 dargestellten MEAs 30 und 40 sind nicht coextensiv. In beiden Fällen ragt die Membran 2 über die bündig miteinander abschließenden GDLs 3 hinaus. Die elastischen Dichtungen 31 und 41 sind jeweils über eine Imprägnierung 34 bzw. 44 des Randbereichs an die MEAs 30 bzw. 40 angebunden und umgreifen diesen. Sowohl die Dichtung 31 als auch die Dichtung 41 sind mit spiegelsymmetrisch auf der Vorderseite und auf der Rückseite ausgebildeten Rippenstrukturen 32 und 33 bzw. 42 und 43 ausgestattet.

Im Fall der MEA 30 ist die innere Längsrippe 4 im Bereich der Imprägnierung 34 angeordnet, während die mittlere und die äußere Längsrippe 5 und 6 im Bereich des überstehenden Endes der Membran 2 angeordnet sind.

Die Dichtung 41 der in den Figuren 4a bis 4c dargestellten MEA 40 umfasst neben den Rippenstrukturen 42 und 43 auch noch eine doppelseitige Dichtlippe 45, die den äußeren Rand der Dichtung 41 bildet. Diese Dichtlippe 45 ist genauso wie die Rippenstrukturen 42 und 43 spiegelsymmetrisch zur Membranebene ausgebildet. Allerdings ragt die Dichtlippe 45 höher von der Vorderseite bzw. Rückseite der Dichtung 41 ab als die Rippenstruktur 42 bzw. 43. Diese sind im wesentlichen über dem imprägnierten Randbereich der MEA 40 ausgebildet.

Beim Assemblieren einer Brennstoffzelle wird die MEA 40 zwischen zwei Bipolarplatten angeordnet und verpresst, um einen guten Flächenkontakt zwischen den einzelnen Lagen der MEA 40 und zu den Bipolarplatten herzustellen. Dabei wird zunächst die Dichtlippe 45 verformt. Die Rippenstrukturen 42 und 43 wirken hier in vorteilhafter Weise als Stopper, die ein übermäßiges Verpressen der Dichtlippe 45 verhindern.

### Bezugszeichen

- 1: -
- 2: Membran
- 3: Gasdiffusionslage (GDL)
- 4: innere Längsrippe
- 5: mittlere Längsrippe
- 6: äußere Längsrippe
- 7: Querrippe
- 8: Kammer
- 9: Kammer

- 10: Membran-Elektroden-Anordnung (MEA)
- 11: Dichtung
- 12: Rippenstruktur (Vorderseite)
- 13: Rippenstruktur (Rückseite)

- 20: Membran-Elektroden-Anordnung (MEA)
- 21: Dichtung
- 22: Rippenstruktur (Vorderseite)
- 23: Rippenstruktur (Rückseite)
- 24: Imprägnierung

- 30: Membran-Elektroden-Anordnung (MEA)
- 31: Dichtung
- 32: Rippenstruktur (Vorderseite)
- 33: Rippenstruktur (Rückseite)
- 34: Imprägnierung

- 40: Membran-Elektroden-Anordnung (MEA)
- 41: Dichtung
- 42: Rippenstruktur (Vorderseite)
- 43: Rippenstruktur (Rückseite)
- 44: Imprägnierung
- 45: Dichtlippe

## Patentansprüche

1. Membran-Elektroden-Anordnung (20; 30; 40) zur Verwendung in Brennstoffzellen, mit einer integrierten elastischen Dichtung (21; 31; 41), die im Randbereich der Membran-Elektroden-Anordnung (20; 30; 40) angeordnet ist, wobei der Randbereich der Membran-Elektroden-Anordnung (20; 30; 40) imprägniert ist und die Dichtung (21; 31; 41) über diese Imprägnierung (24; 34; 44) an die Membran-Elektroden-Anordnung (20; 30; 40) angebunden ist und wobei die Dichtung (21; 31; 41) mindestens drei im wesentlichen parallel zum Rand der Membran-Elektroden-Anordnung (20; 30; 40) verlaufende Längsrippen (4, 5, 6) umfasst, zwischen denen durch Querrippen (7) voneinander getrennte Kammern (8, 9) ausgebildet sind, wobei die Längsrippen (4, 5, 6) und die Querrippen (7) im wesentlichen senkrecht zur Ebene der Membran-Elektroden-Anordnung (20; 30; 40) orientiert sind, wobei die Kammern (8, 9) versetzt zueinander angeordnet sind, so dass die aus den Längsrippen (4, 5, 6) und den Querrippen (7) bestehende Rippenstruktur (22, 23; 32, 33; 42, 43) im wesentlichen nur T-Kreuzungen umfasst, **dadurch gekennzeichnet, dass** die Dichtung (21; 31; 41), mit der Rippenstruktur (22, 23; 32, 33; 42, 43) den mit einer Imprägnierung versehenen Randbereich der Membran-Elektroden-Anordnung (20; 30; 40) umgreift.

2. Membran-Elektroden-Anordnung (20; 30; 40) nach Anspruch 1, **dadurch gekennzeichnet, dass** die Dichtung (21; 31; 41) sowohl eine auf der Vorderseite als auch eine auf der Rückseite ausgebildete Rippenstruktur (22, 23; 32, 33; 42, 43) umfasst.

3. Membran-Elektroden-Anordnung (20; 30; 40) nach Anspruch 2, **dadurch gekennzeichnet, dass** die Lage der Membran-Elektroden-Anordnung (20; 30; 40) bezüglich der Dichtung (21; 31; 41) durch die Höhe der auf der Vorderseite ausgebildeten Rippenstruktur (22; 32; 42) und durch die Höhe der auf der Rückseite ausgebildeten Rippenstruktur (23; 33; 43) bestimmt ist.

4. Membran-Elektroden-Anordnung (20; 30; 40) nach einem der Ansprüche 2 oder 3, **dadurch gekennzeichnet, dass** die auf der Vorderseite ausgebildete Rippenstruktur (22; 32; 42) spiegelsymmetrisch zu der auf der Rückseite ausgebildeten Rippenstruktur (23; 33; 43) ist.

5. Membran-Elektroden-Anordnung (20; 30; 40) nach einem der Ansprüche 1 bis 4, **dadurch gekennzeichnet, dass** die Dichtung (41) mindestens eine zusätzliche, im wesentlichen parallel zum Rand der Membran-Elektroden-Anordnung (20; 30; 40) verlaufende Dichtlippe (45) umfasst, die im wesentlichen senkrecht zur Ebene der Membran-Elektroden-Anordnung (20; 30; 40) orientiert ist.

6. Membran-Elektroden-Anordnung (20; 30; 40) nach Anspruch 5, **dadurch gekennzeichnet, dass** die Dichtlippe (45) auf derselben Seite des Membran-Elektroden-Anordnung (20; 30; 40) ausgebildet ist wie die Rippenstruktur (42, 43) und dass die Dichtlippe (45) weiter von der Ebene zur Membran-Elektroden-Anordnung (20; 30; 40) abragt als die Rippenstruktur (42, 43), so dass die Rippenstruktur (42, 43) als Stopper beim Verpressen der Dichtlippe (45) fungiert.

## Claims

1. Membrane electrode arrangement (20; 30; 40) for use in fuel cells, having an integrated elastic seal (21; 31; 41) which is arranged in the edge area of the membrane electrode arrangement (20; 30; 40), wherein the edge area of the membrane electrode arrangement (20; 30; 40) is impregnated and the seal (21; 31; 41) is linked to the membrane electrode arrangement (20; 30; 40) via this impregnation (24; 34; 44), and wherein the seal (21; 31; 41) comprises at least three longitudinal ribs (4, 5, 6) which run essentially parallel to the edge of the membrane electrode arrangement (20; 30; 40), and between which chambers (8, 9), which are separated from one another by lateral ribs (7), are formed, wherein the longitudinal ribs (4, 5, 6) and the lateral ribs (7) are oriented essentially at right angles to the plane of the membrane electrode arrangement (20; 30; 40), wherein the chambers (8, 9) are arranged offset with respect to one another such that the rib structure (22, 23; 32, 33; 42, 43), which comprises the longitudinal ribs (4, 5, 6) and the lateral ribs (7), essentially comprises only T-crossings, **characterized in that** the seal (21; 31; 41), with the rib structure (22, 23; 32, 33; 42, 43), clasps the edge area of the membrane electrode arrangement (20; 30; 40) which is provided with impregnation.

2. Membrane electrode arrangement (20; 30; 40) according to Claim 1, **characterized in that** the seal (21; 31; 41) comprises a rib structure (22, 23; 32, 33; 42, 43) which is formed both on the front face and on the rear face.

3. Membrane electrode arrangement (20; 30; 40) according to Claim 2, **characterized in that** the position of the membrane electrode arrangement (20; 30; 40) with respect to the seal (21; 31; 41) is governed by the height of the rib structure (22; 32; 42) formed on the front face and by the height of the rib structure (23; 33; 43) formed on the rear face.

4. Membrane electrode arrangement (20; 30; 40) according to one of Claims 2 or 3, **characterized in that** the rib structure (22; 32; 42) which is formed on the front face is mirror-image symmetrical with respect to the rib structure (23; 33; 43) which is formed on the rear face.

5. Membrane electrode arrangement (20; 30; 40) according to one of Claims 1 to 4, **characterized in that** the seal (41) comprises at least one additional sealing lip (45), which runs essentially parallel to the edge of the membrane electrode arrangement (20; 30; 40) and is oriented essentially at right angles to the plane of the membrane electrode arrangement (20; 30; 40).

6. Membrane electrode arrangement (20; 30; 40) according to Claim 5, **characterized in that** the sealing lip (45) is formed on the same face of the membrane electrode arrangement (20; 30; 40) as the rib structure (42, 43), and **in that** the sealing lip (45) projects further from the plane of the membrane electrode arrangement (20; 30; 40) than the rib structure (42, 43) as a result of which the rib structure (42, 43) acts as a stopper when the sealing lip (45) is compressed.

## Revendications

1. Ensemble (20; 30; 40) d'électrode et de membrane destiné à être utilisé dans des cellules à combustible,
qui présente un joint d'étanchéité (21; 31; 41) élastique intégré qui est disposé dans la bordure de l'ensemble (20; 30; 40) d'électrode et de membrane,
la bordure de l'ensemble (20; 30; 40) d'électrode et de membrane étant imprégnée et le joint d'étanchéité (21; 31; 41) étant relié par cette imprégnation (24; 34; 44) à l'ensemble (20; 30; 40) d'électrode et de membrane,
le joint d'étanchéité (21; 31; 41) comprenant au moins trois nervures longitudinales (4, 5, 6) qui s'étendent essentiellement en parallèle au bord de l'ensemble (20; 30; 40) d'électrode et de membrane et entre lesquelles des chambres (8, 9) séparées l'une de l'autre sont formées par des nervures transversales (7),
les nervures longitudinales (4, 5, 6) et les nervures transversales (7) étant orientées essentiellement à la perpendiculaire du plan de l'ensemble (20; 30; 40) d'électrode et de membrane,
les chambres (8, 9) étant décalées l'une par rapport à l'autre de telle sorte que la structure nervurée (22, 23; 32, 33; 42, 43) constituée des nervures longitudinales (4, 5, 6) et des nervures transversales (7) comprend essentiellement uniquement des croisements en T,
**caractérisé en ce que**
le joint d'étanchéité (21; 31; 41) chevauche par la structure nervurée (22, 23; 32, 33; 42, 43) la bordure de l'ensemble (20; 30; 40) d'électrode et de membrane dotée d'une imprégnation.

2. Ensemble (20; 30; 40) d'électrode et de membrane selon la revendication 1, **caractérisé en ce qu'**une structure nervurée (22, 23; 32, 33; 42, 43) est formée aussi bien sur le côté avant que sur le côté arrière du joint d'étanchéité (21; 31; 41).

3. Ensemble (20; 30; 40) d'électrode et de membrane selon la revendication 2, **caractérisé en ce que** la position de l'ensemble (20; 30; 40) d'électrode et de membrane par rapport au joint d'étanchéité (21; 31; 41) est définie par la hauteur de la structure nervurée (22; 32; 42) formée sur le côté avant et par la hauteur de la structure nervurée (23; 33; 43) formée sur le côté arrière.

4. Ensemble (20; 30; 40) d'électrode et de membrane selon l'une des revendications 2 ou 3, **caractérisé en ce que** la structure nervurée (22; 32; 42) formée sur le côté avant est symétrique par rapport à la structure nervurée (23; 33; 43) formée sur le côté arrière.

5. Ensemble (20; 30; 40) d'électrode et de membrane selon l'une des revendications 1 à 4, **caractérisé en ce que** le joint d'étanchéité (41) comprend au moins une lèvre d'étanchéité supplémentaire (45) qui s'étend essentiellement en parallèle au bord de l'ensemble (20; 30; 40) d'électrode et de membrane et qui est orientée essentiellement à la perpendiculaire du plan de l'ensemble (20; 30; 40) d'électrode et de membrane.

6. Ensemble (20; 30; 40) d'électrode et de membrane selon la revendication 5, **caractérisé en ce que** la lèvre d'étanchéité (45) est formée sur le même côté de l'ensemble (20; 30; 40) d'électrode et de membrane que la structure nervurée (42, 43) et **en ce que** la lèvre d'étanchéité (45) déborde davantage du plan en direction de l'ensemble (20; 30; 40) d'électrode et de membrane que la structure nervurée (42, 43), de sorte que la structure nervurée (42, 43) joue le rôle d'un arrêt lorsque la lèvre d'étanchéité (45) est comprimée.
